# EUROPEAN PATENT APPLICATION

(11) **EP 0 559 431 A1**
(43) Date of publication of application: **08.09.1993**
(21) Application number: 93301576.0
(22) Date of filing: 02.03.1993
(51) Int. Cl.: G11B 5/127, G11B 5/17

(54) **Small core metal head transducer and manufacturing method therefor**

(30) Priority: 04.03.1992 US 846454
(71) Applicant: AMPEX SYSTEMS CORPORATION, Redwood City, California 94063-3199 (US)
(72) Inventor: Gooch, Beverley R., Sunnyvale, California (US)
(74) Representative: Horton, Andrew Robert Grant

(57) **Abstract**

A magnetic transducer (10) for reproducing and/or recording high frequency signals with a magnetic medium, the transducer including first (12) and second (14) generally identical sections, which, when bonded together in opposing relation, form a transducer having a formed winding opening (30) adjacent the pole tips and a lower cut winding opening (44), the winding openings being arranged for receiving coil turns therethrough for providing the coil (35) on the axis of the gap of the transducer, the core legs being formed of two strips of Alfesil material, or the like, deposited or sputtered on a non-magnetic substrate. Each core section (12,14) is formed as a portion of an elongate non-magnetic block substrate, initially shaped to provide opposing elongate bonding notches on opposite edges of a common surface, and an intermediate winding groove in proximate relation to one of the notches. A chrome adhesion layer is deposited on the grooved surface and into the winding groove, followed by a core layer of suitable magnetic material, such as Alfesil material. Thereafter the workpiece is provided with an array or a plurality of equally spaced V-shaped track width defining grooves oriented in a direction perpendicular to the winding groove, after which a second winding groove is cut in the workpiece parallel, and in proximate relation, to the first winding groove. A chrome adhesion layer is applied to the grooved surface, followed by a gap layer of insulating material. Two of such workpieces are then placed in opposing aligned abutting relation and glass bonding is effected by means of the two bonding notches, the temperature and time of flow of the glass (57) being controlled to preclude flow of glass into the winding windows.

## Description

### BACKGROUND OF THE INVENTION

This invention relates generally to magnetic head transducers and more particularly to a small core metal head transducer using sputtered strips for forming the core legs thereof.

The performance of a magnetic tape data recorder depends heavily on the properties of the magnetic materials used to make the recording heads and tapes and on the structural configuration of these materials which influence their magnetic properties. Magnetically hard materials, characterized by their high remanence, high coercivity, and low permeability, are chiefly used in the manufacturing of the recording tape and other related recording media. On the other hand, magnetically soft materials, which exhibit low coercivity, low remanence, and relatively high permeability, are commonly utilized to make the magnetic cores for the heads which are the means by which electrical signals are recorded on and reproduced from the magnetic tape.

The typical ring-type magnetic head is composed of two highly permeable magnetic cores, with a nonmagnetic gap spacer and a coil to which signal information is connected. The record head is a transducer that changes the electrical energy from the signal system into a magnetic field that is emitted from a physical gap in the head which impresses a magnetic pattern on the magnetic tape proportional to the electrical signal. The reproduce head, conversely, is a transducer that collects the flux from the magnetic tape across a physical gap and changes it into an electrical signal that is proportional to the recorded flux.

Ferrite materials have been conventionally used as the magnetic material in video heads. The advent of high-definition video tape recorders, digital video tape recorders, computer digital data storage devices and the like, with the resultant use of high coercivity recording media such as metal powder media, metal evaporated media etc., have accelerated the trend towards high density construction for recording even larger amounts of information. As part of this evolution, there is the resultant need to increase the frequency of the information signal recorded on the medium. Conventional ferrite cores are simply incapable of providing the desired characteristics to achieve the required performance for these applications. Due to its inherent brittleness, ferrite cores cannot be made into narrow track widths or thin magnetic core laminations since the consequent chipping and breaking of the ferrite material during the fabrication process cannot be eliminated.

In addition to the fabrication problems associated with ferrite heads, there are performance problems, particularly when such heads are used with high coercivity magnetic tape, and particularly during the recording process. During recording, larger signals are required with high coercivity magnetic tapes than with conventional magnetic tapes. The problem is not severe with the use of a ferrite head during reproduce operations, since signal levels from the tape are much lower in magnitude. With higher recording signals, the signal tends to drive the ferrite heads into saturation. During reproducing or "playback", it has also been observed that there is a significant noise level resulting from contact of such high coercivity magnetic tapes with the ferrite heads, which, in turn, requires more signal to achieve an acceptable signal to noise ratio. Bulk metal heads likewise have performance disadvantages, principally in that they have poor high frequency response.

The above considerations have led to the use in recording heads of any number of other commercially available magnetic materials which have higher flux density saturation, such materials including cobalt-zirconium-niobium (CZN) alloys, iron-aluminum-silicon alloys including Alfesil, Sendust, Spinalloy, or Vacodur each having a nominal composition of 85% iron, 6% aluminum, and 9% silicon, and also amorphous metals.

Besides the magnetic properties of the head core materials used, the critical design considerations that dictate performance of the heads are track width, gap length, gap depth, and core geometry (e.g. path length). Each of these parameters must be selected in accordance with the design criteria of the magnetic tape recorder, while, at the same time, maintaining the head efficiency as high as possible.

There exists, therefore, a significant need for an improved high frequency magnetic transducer having a short magnetic path to reduce core reluctance and to make the reduced core reluctance less dependent on the permeability of the magnetic material used in the magnetic cores. In addition, losses should be minimized, leakage reluctance should be reduced, and the core material must not be driven into saturation when used at normal recording signal levels. The fabrication of such a transducer should be high volume, high accuracy, low cost and achieve a high degree of uniformity. The present invention fulfills these needs and provides further related advantages.

### SUMMARY OF THE INVENTION

The foregoing and other objects of the invention are accomplished by providing an improved magnetic transducer for reproducing and/or recording high frequency signals on a magnetic tape medium, the transducer including first and second generally identical sections, which, when bonded together in opposing relation, form a transducer having a formed winding opening adjacent the pole tips and a lower cut winding opening, the winding openings being arranged for receiving coil turns therethrough for providing the coil on the axis of the gap of the transducer, the core legs being formed of two strips of Alfesil material, or the like, applied, such as by sputtering, on a non-magnetic substrate.

Each core section is formed as a portion of an elongate non-magnetic block substrate, initially shaped to provide opposing elongate bonding notches on opposite edges of a common surface, and an intermediate winding groove in proximate relation to one of the notches. A chrome adhesion layer is deposited on the grooved surface and into the winding groove, followed by a core layer of suitable magnetic material, such as Alfesil material. Thereafter the workpiece is provided with an array or a plurality of equally spaced V-shaped track width defining grooves oriented in a direction perpendicular to the winding groove, after which a second winding groove is cut in the workpiece parallel, and in proximate relation, to the first winding groove. The track width grooves and the second winding groove are of depths sufficient to cut entirely through the adhesion and core layers to thereby provide a plurality of adjacent, generally parallel isolated core sections. The grooved surface then has deposited thereon a chrome adhesion layer, followed by a suitable insulating, or gap layer of suitable material such as aluminum oxide or silicon dioxide. Two of such workpieces are then placed in opposing aligned abutting relation and glass bonding is effected by means of the two bonding notches, the temperature and time of flow of the glass being controlled to preclude flow of glass into the winding windows.

The size of the magnetic core is extremely small which results in a short magnetic path length. By having the magnetic path extremely short, the core reluctance becomes less dependent on the core permeability, resulting in significant gains in flux efficiency in the 75 to 150 MHz frequency range. The entire transducer is fabricated by high volume production, extremely high accuracy, and low cost techniques such as material deposition processes. With batch fabrication, all of the magnetic core material for a large number of transducers is deposited during the same process step and all of the transducing gaps are formed at the same time. This results in a high degree of uniformity for all of the transducers.

Other features and advantages of the present invention will become apparent from the following detailed description, taken in conjunction with the accompanying drawings in which like reference numerals refer to like elements in the several views.

### BRIEF DESCRIPTION OF THE DRAWINGS

Figure 1 is a perspective view of the completed metal in gap transducer according to the invention;
Figures 2 through 4 are perspective views showing the sequential method steps utilized in the fabrication and assembly of the sections of the transducer of Figure 1;
Figure 5 is a cross-sectional view of a workpiece section taken along line 5-5 of Figure 4;
Figure 6 is an exploded perspective view of two workpiece sections placed in opposing facing relation;
Figure 7 is a view similar to Figure 6 with the two sections in abutting relation prior to bonding;
Figures 8 and 9 are perspective views depicting the two step glass bonding method used to bond the two sections of the transducer of Figure 1;
Figure 10 is a sectional view of the transducer of Figure 1 taken along line 10-10 thereof;
Figure 11 is a perspective view of the transducer of Figure 1 with further processing for use on a rotary head assembly; and
Figure 12 is a diagrammatic partial top view of the transducer of Figure 11.

### DETAILED DESCRIPTION OF THE PREFERRED EMBODIMENTS

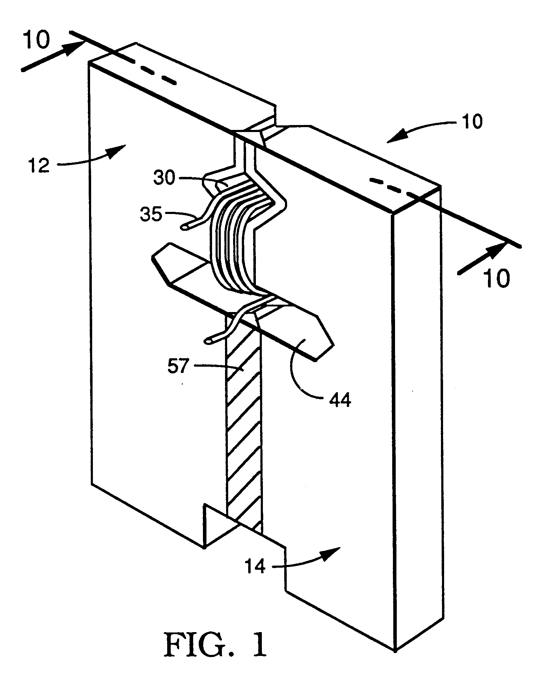

Referring now to the drawings, and particularly to Figure 1, there is shown a head or transducer, generally designated 10, the transducer 10 being formed of first and second core halves, generally designated 12, 14, which as will become apparent during the discussion of the fabrication thereof, are identically configured halves, both of which may be formed at the same time, if desired. The transducer, as assembled, is a formed as a generally plate-shaped member of thin cross-section, which is formed, such as by slicing of two block arrays of transducer halves after the two blocks are aligned and bonded together.

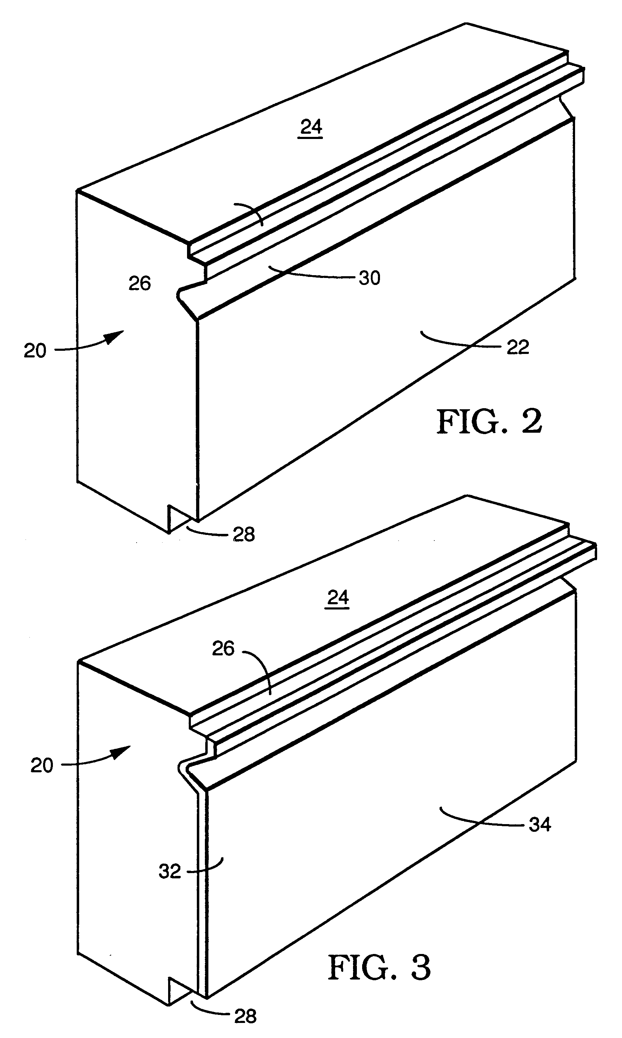

Referring also to Figures 2 through 10, the transducer 10 includes first and second generally identical sections or core halves 12, 14, which, when bonded together in opposing relation, form a transducer having a formed winding opening 30 adjacent the pole tips and a lower cut winding opening 44, the winding openings being arranged for receiving turns of a coil 35 therethrough for providing the coil 35 on the axis of the gap of the transducer 10, the core legs being formed of two strips of high permeability magnetic alloy material, such as Alfesil material, or the like, deposited or sputtered on a non-magnetic substrate. In the instant embodiment, sputtering is preferred.

Each core section or half 12, 14 is formed as a portion of an elongate non-magnetic block substrate 20, initially shaped to provide opposing elongate bonding notches 26, 28 on opposite edges of a common surface 22, and an elongate winding groove 30 in proximate relation and generally parallel to one of the notches. A chrome adhesion layer 32 is deposited on the grooved surface 22 and into the winding groove 30, followed by a core layer 34 of suitable high frequency magnetic material, such as Alfesil material. Alternatively a cobalt-zirconium-niobium alloy may be employed, but in the preferred embodiment, Alfesil is used. Thereafter the workpiece is provided with an array or a plurality of equally spaced V-shaped track width defining grooves 40a-40j oriented in a direction perpendicular to the winding groove 30, after which a second winding groove 44 is cut in the workpiece parallel, and in proximate relation, to the first winding groove 30. The track width grooves 40a-40j and the second winding groove 44 are of depths sufficient to cut entirely through the adhesion layer 32 and core layer 34 to thereby provide a plurality of adjacent, generally parallel core sections. The grooved surface 22 then has deposited thereon a second chrome adhesion layer 52, followed by an insulating, or gap layer 54 of suitable material such as aluminum oxide or silicon dioxide. Two of such workpieces are then placed in opposing aligned abutting relation and glass bonding is effected by means of the two grooves formed by the two pairs of opposing bonding notches, the temperature and time of flow of the glass 57 being controlled to preclude flow of glass into the winding windows.

Referring now to Figures 2 through 5, there will be described the sequential method steps utilized in the fabrication of each core section or half 12, 14 of the high frequency, magnetic transducer 10 of the present invention Referring specifically to Fig. 2, the starting point in the method is a generally elongate thin block substrate 20 of a suitable nonmagnetic, non-conducting material such as calcium titanate, other ceramic material or other comparable dielectric materials. The substrate 20, at the outset, has at least first and second mutually perpendicular surfaces 22 and 24., the surface 22 hereinafter being referred to as the bonding surface, and the surface 24 hereinafter being referred to as the head edge surface. The substrate 20 is then shaped by conventional machining methods or by a reactive ion beam etching (RIBE) to form first and second longitudinally extending right-angularly configured bonding notches, generally designated 26 and 28, respectively, in the upper and lower (as viewed in the drawings) longitudinal edges of substrate 20. The notches 26, 28 are of generally equal depth (in a direction perpendicular to the bonding surface 22) and formed so that one surface thereof is generally perpendicular to the bonding surface 22. A coil winding furrow or groove 30 is formed in the bonding surface 22 of the substrate 20 adjacent the upper edge thereof, in proximate relation to, but displaced from, the upper bonding notch 26. The winding groove 30 may take any convenient configuration, such as V-shaped, U-shaped or semicircularly shaped, the primary function dictating the configuration and depth of the groove 30 being that it be of sufficient dimension to receive the coil winding when bonded to another section as will be described.

Referring to Figure 3, after formation and shaping of the substrate 20, an adhesion layer 32 of a suitable substance, such as chrome, is deposited on the surface 22, followed by a core layer 34 of a suitable high permeability magnetic alloy material, such as Alfesil, which is an iron-aluminum-silicon alloy having a nominal composition of 85% iron, 6% aluminum, and 9% silicon The choice of composition for the adhesion layer 32 is dictated by compatibility with the composition of the material of the substrate 20 as well as compatibility with the composition of the layer 34. The chrome layer 32 and Alfesil layer 34 may be deposited by any suitable means such as sputtering, with the chrome layer thickness being extremely nominal and of the order of 2 to 3 micro inches. The core layer 34 is of a thickness of about 0.01 inch and, essentially forms the core of the head 10. In depositing the layers 32, 34, the bonding notches are protected in any suitable manner to preclude deposition of material thereon, such as by using masking techniques or the like.

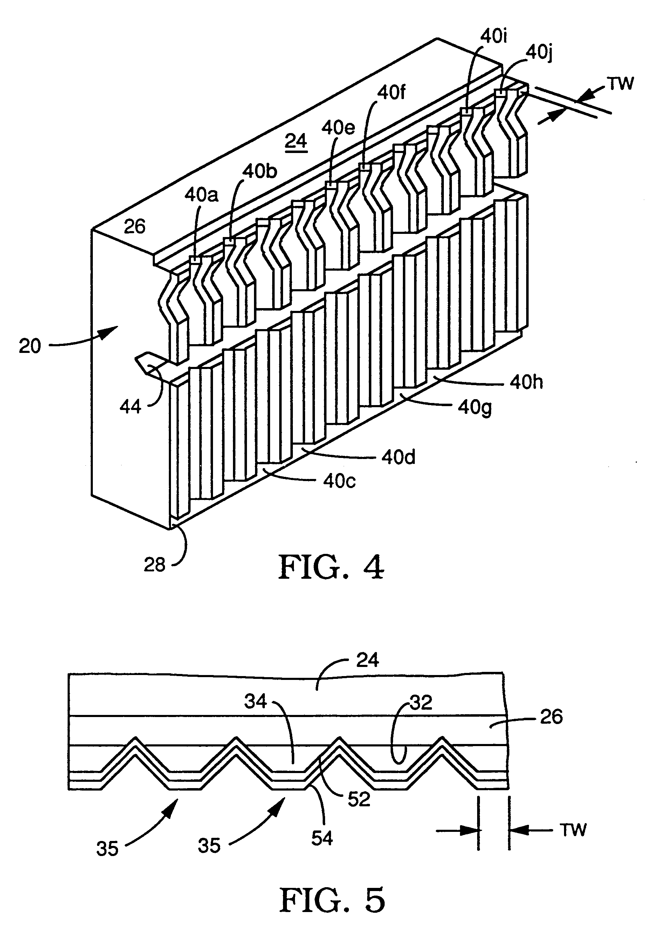

As shown in Figure 4, the partially fabricated workpiece is then provided with a plurality of equally spaced track width notches 40a-40j, the notches 40a-40j extending in a direction perpendicular to the edge surface, and being of a depth sufficient to cut through the layers 32 and 34 to a depth which approximates half the depth of the bonding notches 26, 28. The track width notches may be formed by any convenient method, that is, by conventional machining techniques or by reactive ion beam etching. The track width notches 40a-40j are symmetrical in the horizontal plane (as viewed in the drawings, e.g., See also Figure 5), that is, they are preferably V-shaped in cross-section, as a consequence of which, after slicing as will be hereinafter described, the pole tips, generally designated 35, are trapezoidally configured in cross-section, with the dimension of the short (or leading) leg or edge of the trapezoid defining the track width, designated TW, and which is about 0.002 inch. Alternatively, the track width notches 40a-40j may be cut first and thereafter the core layer 34 may be applied, such as by sputtering. The particular sequence to be selected is more a function of the equipment employed. When cutting the notches prior to sputtering, in some instances a de-burring operation may be required prior to sputtering, but, this would depend on the cutting method used.

A deeper longitudinal winding groove 44 is then cut in a direction generally parallel to the upper winding groove 30, the depth of groove 44 being greater than the depth of the intersecting track width grooves 40a-40j, and greater than the depth of the bonding notches 26, 28. The direction of cut of the groove 44 is generally perpendicular to the plane defined by the bonding surface 22, with the cut extending through both layers 32, 34 and well into the body of substrate 20.

Groove 44 is cut a predetermined distance removed from the winding groove 30, and is substantially larger than the groove 30, in both length and width. The distance between the winding groove 30 and the adjacent surface of notch 26, combined with the track width (TW) defines the area of the front gap, with the distance between the groove 30 and the adjacent upper edge of groove 40 combined with the track width (TW) defining the area of the back gap, with this predetermined distance being selected so as to provide a reluctance ratio of approximately 10:1, that is, the reluctance of the front gap is ten times the reluctance of the back gap. The portions of the Alfesil core layer 34 below the winding groove 44 are then totally out of the magnetic circuit of the transducer 10 to be formed. The position of the winding groove 44 thus determines the length of the core of the transducer, that is, the dimension of the core layer 34 above the groove 44. The core layer 34 above the groove 34 may be viewed as having three portions, the very tip, which is the head core portion corresponding to the front gap portion, the intermediate section, which is the winding groove 30, and the lower core portion between the winding grooves 34 and 40 corresponding to the back gap portion.

Figure 5 is an enlarged cross-sectional view which shows the depositing of additional layers, first there is deposited a second adhesion layer 52 of about 1 to 2 micro inches of chrome followed by an insulation or gap layer 54, this thickness being one half the desired track gap spacing. In this embodiment, the gap layer is approximately 4 micro inches, resulting in a gap spacing of 12 micro inches. The chrome adhesion layer 32 is optional and may be omitted provided that there is proper adhesion between the gap layer 54 and the core layer 34 in the fabrication process employed.

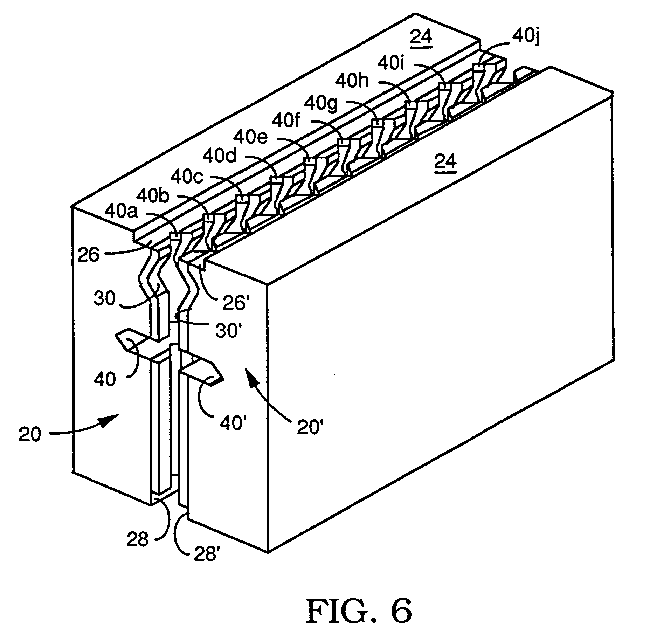

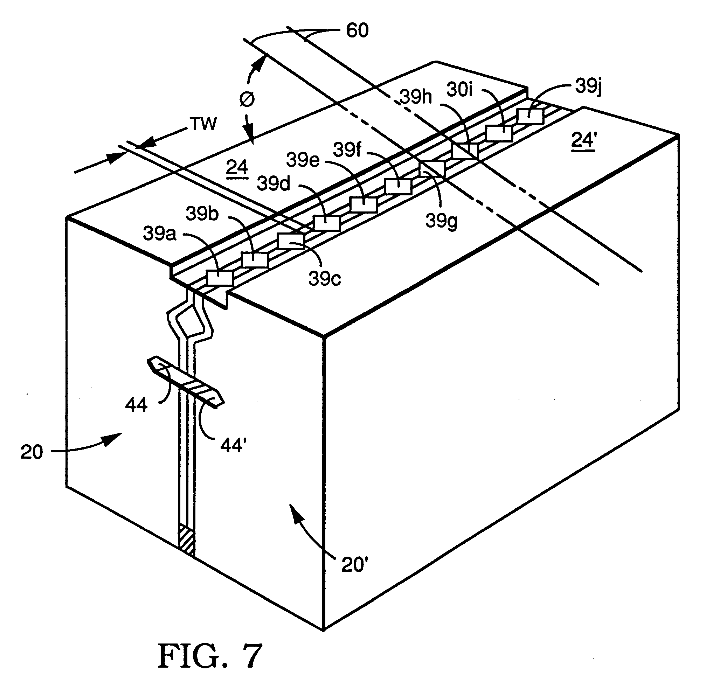

As shown in Figures 6 and 7, the two core halves 12, 14 are portions of the two like blocks 20, 20' which are placed in opposing facing relationship, with the pole faces of the individual blocks in aligned facing relationship. The pole faces of the individual blocks 20, 20' are essentially those remaining portions of the surface 22 on which the aforedescribed layers have been sequentially deposited. The block, designated 20' is identical to the block 20 and, for ease of description, corresponding elements thereof are identified with the same reference numerals followed by a prime (′). With the blocks 20, 20' in facing abutting relationship, as can be seen, there is formed an upper winding window formed of the two window grooves 30, 30', and a lower winding window formed from the cut window grooves 44, 44'. Upper and lower bonding grooves are formed by the upper pair of bonding notches 26, 26' and the lower pair of bonding notches 28, 28'. The two core halves 12, 14 are then suitably clamped together for bonding.

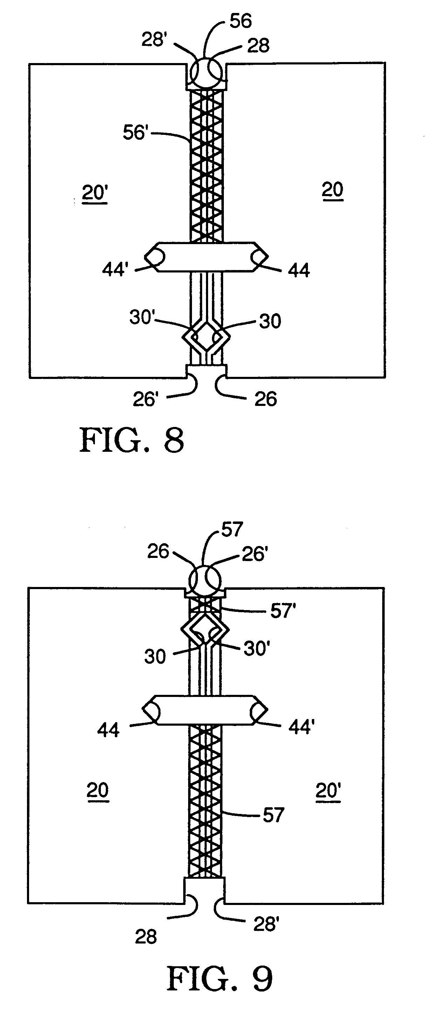

In bonding the blocks 20, 20' together with a glass bonding technique, care must be exercised to preclude the entry of glass bonding material into the winding windows. For this purpose, a two step bonding method is employed as exemplified by Figures 8 and 9. By reference first to Figure 7, with the V-shaped grooves 40a-40j joined in facing relationship with corresponding grooves 40a'-40j', generally diamond-shaped openings 39a-39j are formed at the junction or interface of the two blocks 20, 20'. These openings 39a-39j traverse the depth of the composite block, and provide fluid flow pathways to the upper winding coil window formed by winding grooves 30, 30' and the lower winding window formed by grooves 44, 44'. The composite block is first inverted as shown in Figure 8 (which is a cross-section taken through one of the openings so formed), so that the winding windows are disposed at the bottom of the composite block. A suitable glass rod 56 is positioned within the groove formed by the adjacent bonding notches 28, 28', after which the block and glass are heated to a predetermined temperature for a predetermined period of rime, during which the glass rod 56 melts with the molten glass 56' flowing into the bonding groove as well as into the openings 39a-39j just short of the winding window formed by grooves 44, 44'.

The clamped composite block is then rotated 180 degrees and a second glass rod 57 is positioned in the groove formed by the adjacent pair of bonding notches 26, 26'. The block and glass rod 57 are then heated for a predetermined period of rime at a predetermined temperature until the molten glass 57' flows into the openings just short of the winding window formed by adjacent grooves 30, 30'. The composition of the glass rod 56 (and 57) is chosen to match the thermal coefficient of expansion of the substrate, that is, the calcium titanate material of the substrate blocks 20, 20'. By hearing the block in an inverted position first, this position requires that the glass 56' flow a longer distance to the winding window formed by grooves 44, 44'. Once the glass 56' has flowed into the openings 39a-39j and begun solidification, the block is then inverted. When the second glass rod 57 is placed in the bonding groove formed by notches 26, 26', the flow distance for the glass is a very small distance from the bonding groove to the winding window formed by grooves 30, 30'. Thus, the additional amount of time required for this flow is small. In any event, the flow in either position is controlled as a function of temperature and time to effect the desired result.

Individual transducers 10, as illustrated in Figure 1, are then obtained by slicing or dicing the substrate block 20, 20' along the cut lines 60 shown in Fig. 7. These cut lines 60 would normally be at an angle ø relative to the side of the substrate block 20, 20' to create the desired angle for azimuth recording. While the individual transducers 10 can be sliced off one at a time, it would normally be the practice to gang slice all of the transducers 10 at the same time in a single pass.

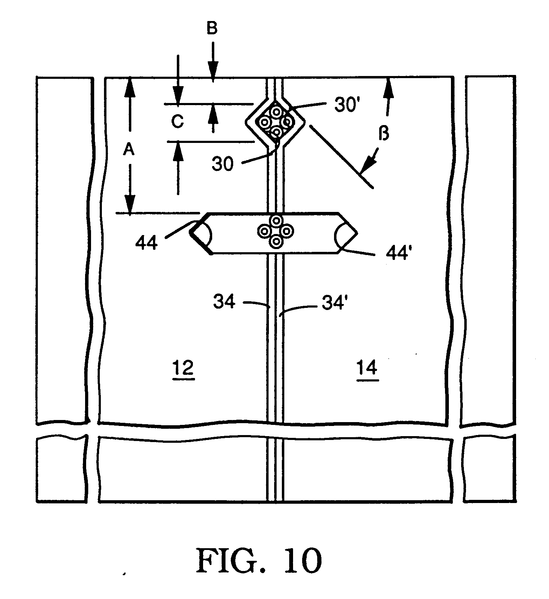

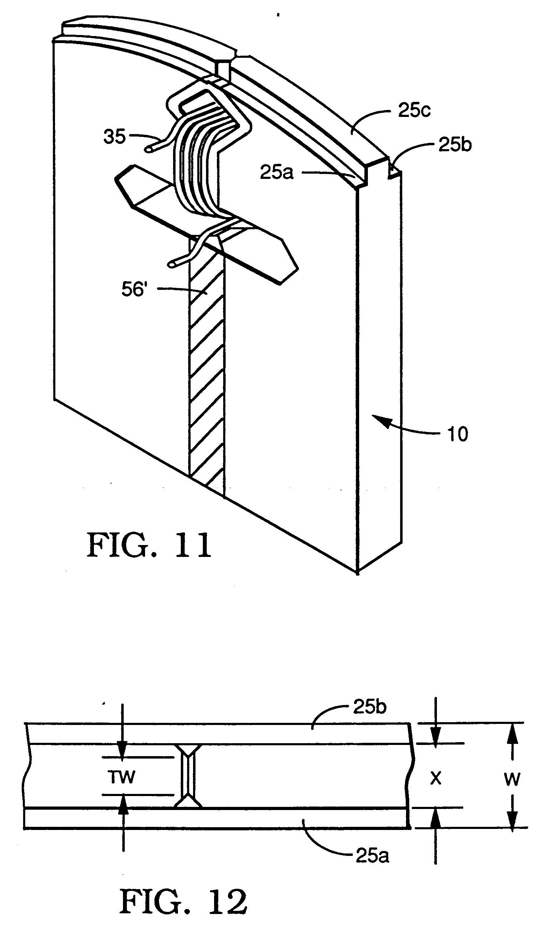

Figure 10 shows a cross-sectional view of the sliced blank for the transducer 10 of Figure 1, in side view, with the turns of coil 35 threaded or passed through the upper and lower winding windows. For ease of description, The physical size of the transducer 10 is quite small. Figures 11 and 12 show the transducer 10 after further processing for use in a rotary head assembly. As shown, the transducer 10 has the head surface thereof rounded or contoured, with the head geometry further modified by the removal of portions to form lateral notches or shoulder portions 25a, 25b, thereby providing a narrow ridge portion 25c on which the tape moves. In practice, during assembly, this contouring and notching will be performed prior to slicing the substrate blocks 20, 20'. First the head surface 24 will be contoured; then, grooves of appropriate width will be formed at the cut lines 60 (See Figure 7); then the block will be sliced at the midpoint of these grooves to provide the configuration as shown in Figure 10. Figure 11 shows the results, with the track width, being about 0.002 inch, the thickness T of the transducer being about 0.008 inch, and the thickness X of the resultant ridge 25c being about 0.004 inch.

By way of example, the length and width of an individual transducer 10 would be in the order of 0.100 to 0.125 inches while the thickness would be in the order of 0.008 to 0.020 inches. The active magnetic portion of the core layer 34, that is, the portion of the layer 34 above the lower winding window formed by grooves 44, 44', has a dimension "A" of about 0.016 inch, thus resulting in an extremely small size for the magnetic core. The gap depth dimension, designated "B", is on the order of 0.01 inches with the upper winding window dimension "C" of about 0.004 inches leaving a spacing between the upper and lower winding windows of about 0.011 inch. As a consequence, the coil 35 lies generally in the same plane as the plane of the gap, with the winding length (distance between windows) being 0.011 inch, with the upper winding window (formed by grooves 30, 30') being only 0.004 inch and substantially filled with the turns of the coil 35, with the coil 35 being only 0.01 inch from the path of the surface of the magnetic media or tape. As best shown in Figure 10, the window formed by the grooves 30, 30' is approximately square, with the angle β of the grove 30, 30' being about 45 degrees.

In such a metal-in-gap transducer 10, the magnetic path encounters two gaps, the front gap and the back gap. With the large surface area of the gap confronting surfaces in the back gap relative to the area of the gap confronting surface of the front gap, the back gap provides a very low reluctance path compared to the front gap, as a result of which the flux concentration is at the front gap in very close proximity to the coil 35. With the small size of the transducer 10 constructed in accordance with the instant invention, the inductance per turn of the windings of the coil 35 is also reduced, thus allowing more turns for a given resonant frequency which will result in more head output voltage.

The small physical size of the magnetic core results in a short magnetic path length. By having the magnetic path extremely short, the core reluctance becomes less dependent on the core permeability, resulting in significant gains in flux efficiency in the 100 to 150 MHz frequency range. The entire transducer 10 is fabricated by high volume production, extremely high accuracy, and low cost techniques such as material deposition and sputtering processes. With batch fabrication, all of the magnetic core material for a large number of transducers 10 is deposited during the same process step and all of the transducing gaps are formed at the same time. This results in a high degree of uniformity for all of the transducers 10. In contrast to ferrite heads of similar dimensions, the metal in gap transducer 10 of the present invention exhibits signal levels of about 6 dB improvement in the frequency range of interest, and a significant reduction in the noise level associated with tape contact with the transducer.

The construction of the transducer 10 is economical, straightforward and uncomplicated, and the ultimate in simplicity. The transducer 10 of the present invention is essentially two sputtered core legs on the formed facing edges of a substrate. The fabrication techniques are simple and uncomplicated resulting in a low cost, highly flux efficient unit utilizing conventional readily available fabrication equipment.

A wide variety of modifications and improvements to the laminated, high frequency, magnetic transducer and manufacturing method therefor described herein are believed to be apparent to those skilled in the art. Accordingly, no limitation on the present invention is intended by way of the description herein, except as set forth in the appended claims.

## Claims

1. A magnetic transducer for reproducing and/or recording high frequency signals with a magnetic medium, comprising:
a pair of generally identical magnetic core sections having facing edges thereof separated by an insulation gap and bonded together to define a surface generally perpendicular to said edges, each magnetic core section having a thin layer of high permeability magnetic material deposited on said facing edges, said edges being configured such that when opposed together said pair of magnetic core sections form a first winding window adjacent said surface;
a second winding window formed in said pair of core sections in proximate relation to said first window and displaced therefrom in a direction away from said surface; and
coil means through said windows in general alignment with the junction of said edges, said coil means substantially filling said first winding window.

2. The magnetic transducer of claim 1 wherein said magnetic core sections are formed substantially of an insulation material.

3. The magnetic transducer of claim 2 wherein the width of the facing edge defines the track width and wherein said thin layer of high permeability material is a sputtered magnetic material.

4. The magnetic transducer of claim 3 wherein said magnetic material is selected from the group consisting of cobalt-zirconium-niobium alloys, and iron-aluminum-silicon alloys.

5. The magnetic transducer of claim 4 wherein said insulation material is selected from the group consisting of alumina, silicon dioxide, and ceramics.

6. The magnetic transducer of claim 1 wherein the area of said second winding window is substantially greater than the area of said first winding window.

7. The magnetic transducer of claim 1 wherein the spacing between said first and second winding windows is substantially greater than the spacing between said surface and said first winding window.

8. The magnetic transducer of claim 7 wherein the spacing between said first and second winding windows is about ten times greater than the spacing between said surface and said first winding window.

9. The magnetic transducer of claim 4 wherein said thin layer is a sputtered layer of about one thousandths of an inch.

10. The magnetic transducer of claim 9 wherein the spacing between said surface and said first window is about one thousandths of an inch.

11. A magnetic transducer for reproducing and/or recording high frequency signals with a magnetic tape medium, comprising:
a pair of generally identical magnetic core sections having facing edges thereof separated by an insulation gap and bonded together to define a surface generally perpendicular to said edges, said surface being configured for placement adjacent a magnetic tape medium, each magnetic core section including
a substrate of an insulation material and having one of said facing edges;
a thin layer of high permeability magnetic material deposited on said facing edges, said edge being configured such that when opposed together with another like edge, said edges form first and second winding windows with one of said winding windows closely adjacent said surface; and
a signal coil threaded through said windows in general alignment with the junction of said edges, said signal coil substantially filling the winding window adjacent said surface.

12. The magnetic transducer of claim 11 wherein said thin layer of high permeability material is a spurred magnetic material.

13. The magnetic transducer of claim 11 wherein said magnetic material is selected from the group consisting of cobalt-zirconium-niobium alloys, and iron-aluminum-silicon alloys.

14. The magnetic transducer of claim 12 wherein said insulation material is selected from the group consisting of alumina, silicon dioxide, and ceramics.

15. The magnetic transducer of claim 11 wherein the area of the winding window adjacent said surface is substantially smaller than the area of the other winding window.

16. The magnetic transducer of claim 11 wherein the spacing between said winding windows is about ten times greater than the spacing between said surface and the winding window adjacent said surface.

17. The magnetic transducer of claim 11 wherein said thin layer is a sputtered layer of about one thousandths of an inch.

18. The magnetic transducer of claim 16 wherein the spacing between said surface and the winding window adjacent said surface is about one thousandths of an inch.

19. The magnetic transducer of claim 11 wherein said thin layer of magnetic material is deposited on the facing edge of said winding window adjacent said surface.

20. A workpiece for forming a plurality of magnetic transducers for reproducing and/or recording high frequency signals with a magnetic tape medium, said workpiece comprising:
a generally block-shaped substrate of dielectric material having first and second mutually perpendicular surfaces;
a first shallow groove in one of said surfaces on a line generally parallel to and proximate the other of said surfaces;
a second much larger groove in said one surface in parallel relation to said first groove;
a plurality of equally spaced notches in said one surface in a direction generally perpendicular to said first groove for providing a plurality of edges intermediate said notches; and
a thin layer of high permeability magnetic material deposited on at least said plurality of edges, said workpiece being configured, dimensioned and arranged so that when positioned in edge facing relation with another like workpiece and bonded thereto with an insulation material therebetween forms a matrix of transducer blanks, which when formed by cutting the so bonded workpieces form transducers, each having first and second winding windows formed by said first and second grooves.

21. The workpiece of claim 20 wherein said thin layer of high permeability magnetic material is a sputtered magnetic material.

22. The workpiece of claim 20 wherein said magnetic material is selected from the group consisting of cobalt-zirconium-niobium alloys, and iron-aluminum-silicon alloys.

23. The workpiece of claim 20 wherein said dielectric material is selected from the group consisting of alumina, silicon dioxide, and ceramics.

24. The workpiece of claim 20 wherein the dimensions of said first and second grooves are such that the area of the winding window adjacent said other surface is substantially smaller than the area of the other winding window.

25. The workpiece of claim 24 wherein the spacing between said winding windows is about ten times greater than the spacing between said other surface and the winding window adjacent said other surface.

26. The workpiece of claim 25 wherein said thin layer of magnetic material is a sputtered layer of about one thousandths of an inch.

27. The workpiece of claim 26 wherein the spacing between said surface and the winding widow adjacent said surface is about one thousandths of an inch.

28. The workpiece of claim 27 wherein the width of said edges is about two thousandths of an inch.

29. The workpiece of claim 28 wherein the spacing between said winding windows is about eleven thousandths of an inch.

30. A method of fabricating a magnetic transducer for reproducing and/or recording high frequency signals with a magnetic medium, comprising the steps of:
shaping one flat first surface of a nonmagnetic, non-conducting substrate having a second surface generally perpendicular to the first surface to form a first groove in said first surface in proximate relation to, and generally parallel to, said second surface;
depositing a thin layer of high permeability magnetic material on said first surface and in said groove;
forming a plurality of equally spaced generally identical notches in the thus deposited surface with said notches in a direction generally perpendicular to said groove and of a depth sufficient to form lands between said notches, with each said land having a portion of said magnetic layer thereon;
forming a second groove of greater depth than said first groove in a direction generally parallel to said first groove;
depositing a gap insulation layer on at least said lands;
bonding together two such so processed substrates with the lands thereof in abutting facing relationship;
slicing individual magnetic transducers from said bonded substrates; and
providing signal coils for at least some of said individual transducers by passing windings through the two windows formed by said first and second grooves with the windings of said signal coils substantially filling the window formed by the first grooves.

31. The method of fabricating a magnetic transducer of claim 30 wherein said magnetic material is sputtered and selected from the group consisting of cobalt-zirconium-niobium alloys and iron-aluminum-silicon alloys.

32. The method of fabricating a magnetic transducer of claim 30 wherein said insulation material is selected from the group consisting of alumina, silicon dioxide, and ceramics.

33. The method of fabricating a magnetic transducer of claim 30 wherein the thickness of said thin layers of magnetic material is on the order of one thousandths of an inch and the spacing between said first groove and said second surface is about one thousandths of an inch.

34. The method of fabricating a magnetic transducer of claim 33 wherein the window formed by said first groove is about square and having a dimension of about four thousandths of an inch.

35. The method of fabricating a magnetic transducer of claim 34 wherein the spacing between the two windows is about eleven thousandths of an inch.

36. A method of fabricating a magnetic transducer for reproducing and/or recording high frequency signals with a magnetic medium, comprising the steps of:
shaping one flat first surface of a nonmagnetic, non-conducting substrate having a second surface generally perpendicular to the first surface to form a first groove in said first surface in proximate relation to, and generally parallel to, said second surface;
forming a plurality of equally spaced generally identical notches in said one surface with said notches in a direction generally perpendicular to said groove and of a depth sufficient to form lands between said notches;
depositing a thin layer of high permeability magnetic material on said one surface at least in said groove and on said lands;
forming a second groove of greater depth than said first groove in a direction generally parallel to said first groove;
depositing a gap insulation layer on at least said lands;
bonding together two thus processed substrates with the lands thereof in abutting facing relationship;
slicing individual magnetic transducers from said bonded substrates; and
providing signal coils for at least some of said individual transducers by passing windings through the two windows formed by said first and second grooves.

37. The method of fabricating a magnetic transducer of claim 36 wherein the windings of said signal coil substantially fills the window formed by the first grooves.

38. The magnetic transducer of claim 36 wherein said magnetic material is sputtered and selected from the group consisting of cobalt-zirconium-niobium alloys and iron-aluminum-silicon alloys.

39. The method of fabricating a magnetic transducer of claim 36 wherein said insulation material is selected from the group consisting of alumina, silicon dioxide, and ceramics.

40. The method of fabricating a magnetic transducer of claim 36 wherein the thickness of said thin layers of magnetic material is on the order of one thousandths of an inch and the spacing between said first groove and said second surface is about one thousandths of an inch.

41. The method of fabricating a magnetic transducer of claim 40 wherein the window formed by said first groove is about square and having a dimension of about four thousandths of an inch.

42. The method of fabricating a magnetic transducer of claim 41 wherein the spacing between the two windows is about eleven thousandths of an inch.

43. The method of fabricating a magnetic transducer of claim 36 wherein the width of said lands defines the track width of said transducer and the spacing between said second surface and the widow formed by said first grooves defines the transducer gap depth.
